# EUROPEAN PATENT SPECIFICATION

(11) **EP 0 593 287 B1**
(45) Date of publication and mention of the grant of the patent: **09.12.1998**
(21) Application number: 93308180.4
(22) Date of filing: 13.10.1993
(51) Int. Cl.: H04B 10/20

(54) **Electrooptical connector in an optical bus system**
Elektrooptische Steckverbindung in einem optischen Bussystem
Connecteur électro-optique dans un système de bus optique

(30) Priority: 13.10.1992 GB 9221439
(43) Date of publication of application: 20.04.1994
(73) Proprietor: GEC-MARCONI LIMITED, Stanmore, Middlesex HA7 4LY (GB)
(72) Inventor: Wisbey, Philip Henry, Colchester, Essex CO1 2DL (GB)
(74) Representative: Goddin, Jeremy Robert

(56) References cited:
- EP-A- 0 459 289
- WO-A-85/03179
- GB-A- 2 201 561
- US-A- 4 707 061
- PATENT ABSTRACTS OF JAPAN vol. 7, no. 84 (E-169)(1229) 8 April 1983 & JP-A-58 012 450 (NIPPON DENSHIN DENWA)

## Description

This invention concerns connectors for interfacing between optical and electrical circuits and is particularly, but not exclusively concerned with the type of connector, generally termed a "back plane" connector whereinto an electrical circuit card may be plugged.

The communication of signals and data by means of modulating optical beams transmitted via optical fibres or other optical waveguides offers the potential advantages of freedom from radio frequency interference (RFI) and very low propagation loss (fractions of dB per kilometer for single-mode fibres).

In terms of equipment practise (i.e. designing and constructing racks of electronic equipment - each rack comprising a number of trays each containing a number of electronic printed circuit card assemblies), there is considerable, and growing, interest in realising so called "optical back-planes" to route and interconnect high-speed signals between cards, trays and using standardised back-planes containing a common optical waveguide "bus" which can be connected to optical waveguides on each card via a standard optical plug and socket arrangements akin to the ubiquitous edge-connector.

In general however, while the equipment designer will be quite aware of the performance benefits that will accrue from the use of such optical back-planes, he will nevertheless prefer to be presented with straightforward electrical design tasks at the equipment level (i.e. he will prefer not to have to be expert at opto-electronic data communications in order to route and interconnect what are basically electrical signals). The present invention seeks to provide just such an interface by the use of connectors which emulate electrical interconnects, using opto-means.

Prior art document WO-A-85 03179 (Hase) teaches a light conducting plate on which individual switching circuits are mounted and provides an alternative to more conventional electrical bus systems. The plate has a boundary layer of material with an index of refraction selected so as to retain light within the plate. Coupling of the switching circuits is achieved by arranging coupling windows in the boundary layer of material with electro-optical and opto-electrical transducers at both the transmit and receive windows. Light transmitted by a transmitter is refracted through the plate to a receiver via each of their respective windows.

JP-A-58 012 450 (Nippon) teaches large capacity interconnection of packages, without complicated back wiring boards, by converting an electrical signal associated with each package into an optical signal using an electro-optic converting circuit and transmitting that signal along an optical fibre which interconnects a plurality of packages. A receiving package converts the received optical signal into an electrical signal using an electro-optic converting circuit.

Therefore, from the prior art, it is known to provide an opto-electrical connector having a plurality of optical input and/or output paths operably connected to a transducer means and an associated plurality of electrical input and/or output paths also operably connected to the transducer means, the transducer means being operable to convert an optical signal on an optical input path into an electrical signal on an electrical output path and/or being operable to convert an electrical signal on an electrical input path into an optical signal on an optical output path.

It is an object of the present invention to provide an improved connector wherein the aforesaid emulation is achieved.

According to the present invention an opto-electrical connector is releasably connectable and comprises a first part arranged to carry the optical input and/or output paths and a second part to mate with the first part and to carry the electrical input and/or output paths.

The first part of the connector may comprise a socket and the second part may comprise a plug.

The transducer means are preferably located in the second part and each path in the first part of the connector may be entirely optical.

Each input and output path of the first part advantageously couples directly or indirectly with an optical bus. Similarly, each electrical input and output path of the second part may be connected to an electrical bus.

One or more of the paths through the connector may be bi-directional.

The transducer means of each path through the connector may comprise an opto-electrical transducer and/or an electro-optical transducer.

Each path may include amplifier means. Preferably, each amplifier means may be arranged to amplify an electrical input or electrical output signal. Each amplifier means may be a bi-directional buffer amplifier for conditioning electrical input and output signals.

In a preferred embodiment, the first part of the connector may be in the form of a back plane connector of a rack-mounted electronic apparatus wherein data and/or signal paths may be carried by at least one optical bus and each second part of the connector is carried by a data processing card, such as a printed circuit card, and may be arranged to be plugged into the back plane connector with the first and second parts of the connector mating.

Either the or some of the optical paths or the or some of the electrical paths may carry non-interfering signals using Wavelength Division Multiplexing (WDM) or a similar technique, the first or second part of the connector then including the necessary optical and/or electrical multiplexing or demultiplexing means.

The invention will be described further, by way of example, with reference to the accompanying drawings, in which:-
Figure 1 is a schematic representation of part of a rack mounted electronic apparatus; and
Figure 2 is a diagrammatic representation of one form of a connector, in accordance with the present invention, used in the apparatus of Figure 1.

As schematically shown in the drawings, an electronic apparatus may be in rack mounted form. Examples of such apparatus are well known and widespread. Computers from desk-top to mainframe generally have such form as do digital exchanges, radar apparatus, video signal processors etc.

As is conventional, the apparatus comprises a frame indicated in the schematic by the reference numeral 10 which supports trays schematically shown at 12, each arranged to receive a plurality of cards schematically indicated by numeral 14. In the conventional form, the frame has an electrical bus which supplies tray buses with data and power lines. The cards are usually printed circuit cards adapted to be supported on the trays and to be connected to the tray bus via an electrical multipin or edge connector schematically shown at 16.

Whilst the technology of optical data or other signal transmission is now well advanced, the cards themselves are still arranged for electrical data or signal processing. In accordance with the present invention, the connectors 16 are interface connectors and enable the use of optical frame and tray buses for carrying data or signals between the cards 14 whilst the cards themselves do not require hybrid circuitry and operate on electrical data or signals as heretofore.

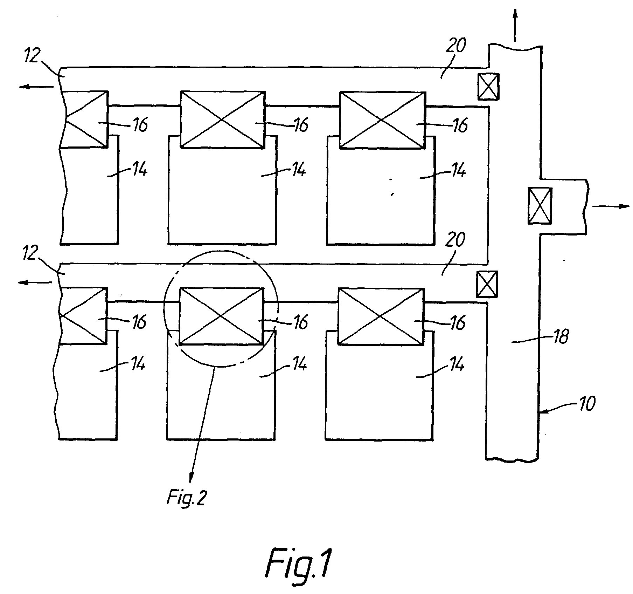

Thus, in the arrangement schematically shown in Figure 1, the frame 10 carries a rack optical bus 18 which in turn feeds intra-tray optical buses 20 whereto a first part of each connector 16 is connected. Each card 14 has secured thereto a second part of the connector 16 which second part has electrical outputs and electrical inputs. In accordance with the present invention, the connector 16 embodies all the necessary transducers and circuitry to interface between the electrical circuitry of the card and the optical circuitry of the tray and frame buses.

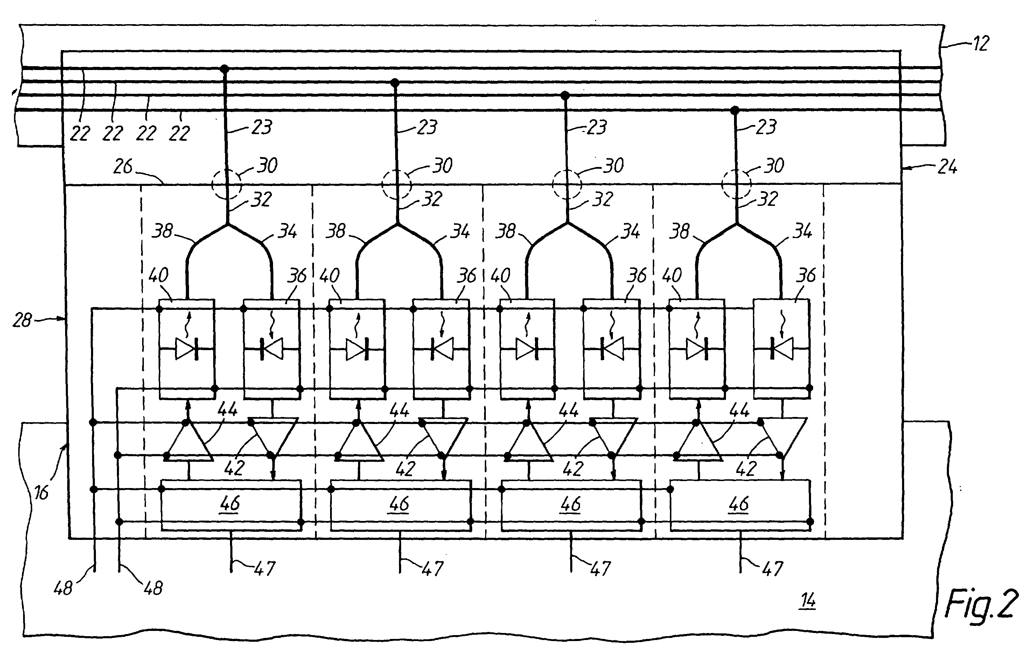

Referring now to Figure 2, one form of connector 16 is shown. The intra-tray optical bus 20 is in the form of a plurality of optical waveguides 22. Each waveguide 22 provides a spur 23 into a first part 24 of the connector 16. At a mating interface 26 between the first part 24 and a second part 28 of the connector 16, optical connections 30 are provided whereby optical data or signals on the bus 20 are fed to the second part 28 of the connector 16. In the second part 28, each optical coupling at the interface 26 feeds a waveguide splitter/combiner 32 to provide an input 34 to a photodiode 36 and an output 38 from a laser or LED 40. The diode 36 is followed by an amplifier 42 and each laser or LED 40 is preceded by a driver amplifier 44 whereby incoming or outgoing optical signals are converted to or from matching electrical signals on a card 14 whereon the second part 28 of the connector 16 is mounted. The output of the amplifier 42 and the input to the driver amplifier 44 are connected via a control means 46 to provide a 1-bit input/output port 47 of, as shown, a 4-bit input/output port of the card 14.

Power leads 48 from the card 14 provide power for the transducers and their amplifiers. The card 14 is, in this case, supplied with power, for example, via a flying lead and a further connector (not shown). It will be appreciated that power may be provided along the buses 18 and 20 and the connector 16 may include power feed paths to power the transducers (and the cards) if desired.

The first and second parts 24, 28 of the connector 16 are arranged to mate in close tolerance register. In this way, the optical connections 30 may be simplified requiring only that the spurs 23 be brought into close adjacency with the inputs to the splitters/combiners 32 so that their evanescent fields interact. Similarly, the spurs 23 may be coupled to the waveguides 22 merely by interaction of the evanescent field of light conducted therealong.

The invention is not confined to the precise details of the foregoing example and variations may be made thereto. For instance, the transducers 36 and 40, and/or amplifiers 42, 44 and/or the control means 46 may be provided in the first part of the connector 16. In such case, the combiner/splitters 32 may couple directly to the waveguides 22 whereby losses may be minimised. The path connections between the first and second parts 24, 28 of the connector 16 may then be provided by simple ohmic connections.

The connector 16 has been described, for simplicity, in relation to a 4-bit bus. It will be appreciated that the invention is equally applicable to any size optical bus. Further, control paths have not been shown. The connector 16 may be "intelligent" and incorporate additional degrees of interface "smartness" whereby problems associated with intra-equipment communication protocols and electrical/optical signal multiplexing may be reduced.

Further, wavelength division multiplexing may be employed to permit simultaneous transmission of more than one optical signal along each waveguide 22. In such case, multiplexing and de-multiplexing means are provided in the connector 16 and the number of electrical paths increased by the multiplexing factor.

The electrical I/O control means 46 could itself provide MUX/DMUX to increase the number of effective electrical inputs and outputs.

The connector 16 could be up-rated by the provision of application specific integrated circuits (ASICs) dedicated to a particular bus operating protocol.

Other variations are possible within the scope of the present invention.

## Claims

1. An opto-electrical connector (16) having a plurality of optical input/or output paths (23) operably connected to a transducer means (36, 40) and an associated plurality of electrical input and/or output paths (47) also operably connected to the transducer means (36, 40), the transducer means being operable to convert an optical signal on an optical input path (23) into an electrical signal on an electrical output path (47) and/or being operable to convert an electrical signal on an electrical input path (47) into an optical signal on an optical output path (23), characterised in that the opto-electrical connector (16) is releasably connectable and comprises a first part (24) arranged to carry the optical input and/or output paths (23) and a second part (28) arranged to mate with the first part (24) and to carry the electrical input and/or output paths (47).

2. An opto-electrical connector (16), as in Claim 1, wherein the first part (24) of the connector (16) comprises a socket and the second part (28) comprises a plug.

3. An opto-electrical connector (16), as in Claim 1 or 2, wherein the transducer means (36, 40) is located in the second part and each path (23) in the first part (24) of the connector (16) is entirely optical.

4. An opto-electrical connector (16), as in any preceding claim, wherein each input and output path (23) of the first part (24) couples directly or indirectly with an optical bus (20).

5. An opto-electrical connector (16), as in any preceding claim, wherein each electrical input and output path (47) of the second part (48) are connected to an electrical bus.

6. An opto-electrical connector (16), as in any preceding claim, wherein one or more of the paths (23, 47) through the connector (16) is bi-directional.

7. An opto-electrical connector (16), as in any preceding claim, wherein the transducer means (36, 40) of each path through the connector (16) comprises an opto-electric transducer (36) and/or an electro-optic transducer (40).

8. An opto-electrical connector (16), as claimed in any preceding claim, wherein each path (23, 47) includes amplifier means (42, 44).

9. An opto-electrical connector (16), as in Claim 8, wherein each amplifier means (42, 44) is arranged to amplify an electrical input or electrical output signal.

10. An opto-electrical connector (16), as in Claim 8 or 9, wherein each amplifier means (42, 44) is a bi-directional buffer amplifier for conditioning electrical input and output signals.

11. An opto-electrical connector (16), as in any preceding claim, wherein the first part (24) of the connector (16) is in the form of a back plane connector of a rack mounted electronic apparatus wherein data and/or signal paths are carried by the at least one optical bus (18), each second part (28) of the connector (16) is carried by a data processing card, and are arranged to be plugged into the back plane connector with the first and second parts (24, 28) of the connector mating.

12. An opto-electrical connector (16), as in any preceding claim, wherein at least one of the optical paths (23) or at least one of the electrical paths (47) carries non-interfering signals using Wavelength Division Multiplexing (WDM) or a similar technique, the first or second part (24 or 28) of the connector (16) then including optical and/or electrical multiplexing or demultiplexing means.

## Patentansprüche

1. Optoelektrischer Verbinder (16) mit mehreren optischen Eingangs/oder Ausgangsstrecken (23), die betätigbar mit einem Transducermittel (36, 40) verbunden sind, und mehreren zugehörigen elektrischen Eingang- und/oder Ausgangsstrecken (47), die auch betätigbar mit dem Transducermittel (36, 40) verbunden sind, wobei das Transducermittel betätigt werden kann, um ein optisches Signal an einer optischen Eingangsstrecke (23) in ein elektrisches Signal an einer elektrischen Ausgangsstrecke (47) umzuwandeln, und/oder betätigbar werden kann, um ein elektrisches Signal an einer elektrischen Eingangsstrecke (47) in ein optisches Signal an einer optischen Ausgangsstrecke (23) umzuwandeln, dadurch gekennzeichnet, daß der optoelektrische Verbinder (16) lösbar verbunden werden kann und ein erstes Teil (24) umfaßt, das derart ausgebildet ist, daß es die optischen Eingangs- und/oder Ausgangsstrecken (23) trägt, und ein zweites Teil (28) umfaßt, das derart ausgebildet ist, daß es zu dem ersten Teil (24) paßt und die elektrischen Eingangs- und/oder Ausgangsstrecken (47) trägt.

2. Optoelektrischer Verbinder (16) nach Anspruch 1, wobei das erste Teil (24) des Verbinders (16) eine Buchse umfaßt und das zweite Teil (28) einen Stecker umfaßt.

3. Optoelektrischer Verbinder (16) nach Anspruch 1 oder 2, wobei das Transducermittel (36, 40) in dem zweiten Teil angeordnet ist und jede Strecke (23) in dem ersten Teil (24) des Verbinders (16) vollständig optisch ist.

4. Optoelektrischer Verbinder (16) nach einem der vorhergehenden Ansprüche, wobei jede Eingangs- und Ausgangsstrecke (23) des ersten Teils (24) direkt oder indirekt mit einem optischen Bus (20) gekoppelt ist.

5. Optoelektrischer Verbinder (16) nach einem der vorhergehenden Ansprüche, wobei jede elektrische Eingangs- und Ausgangsstrecke (47) des zweiten Teils (48) mit einem elektrischen Bus verbunden ist.

6. Optoelektrischer Verbinder (16) nach einem der vorhergehenden Ansprüche, wobei eine oder mehrere der Strecken (23, 47) durch den Verbinder (16) bidirektional ist.

7. Optoelektrischer Verbinder (16) nach einem der vorhergehenden Ansprüche, wobei das Transducermittel (36, 40) jeder Strecke durch den Verbinder (16) einen optoelektrischen Transducer (36) und/oder einen elektrooptischen Transducer (40) umfaßt.

8. Optoelektrischer Verbinder (16) nach einem der vorhergehenden Ansprüche, wobei jede Strecke (23, 47) ein Verstärkermittel (42, 44) umfaßt.

9. Optoelektrischer Verbinder (16) nach Anspruch 8, wobei jedes Verstärkermittel (42, 44) derart ausgebildet ist, daß es ein elektrisches Eingangssignal und ein elektrisches Ausgangssignal verstärkt.

10. Optoelektrischer Verbinder (16) nach Anspruch 8 oder 9, wobei jedes Verstärkermittel (42, 44) ein bidirektionaler Pufferverstärker ist, um elektrische Eingangs- und Ausgangssignale aufzubereiten.

11. Optoelektrischer Verbinder (16) nach einem der vorhergehenden Ansprüche, wobei das erste Teil (24) des Verbinders (16) die Form eines Rückwandverbinders einer gestellmontierten elektronischen Vorrichtung aufweist, wobei Daten- und/oder Signalstrecken von dem mindestens einen optischen Bus (18) getragen sind, und jedes zweite Teil (28) des Verbinders (16) von einer Datenbearbeitungskarte getragen ist, und derart ausgebildet sind, daß es in den Rückwandverbinder gesteckt werden kann, wobei das erste und das zweite Teil (24, 28) des Verbinders zusammenpassen.

12. Optoelektrischer Verbinder (16) nach einem der vorhergehenden Ansprüche, wobei mindestens eine der optischen Strecken (23) oder mindestens eine der elektrischen Strecken (47) unter Verwendung einer Wavelength Division Multiplexing-Technik (Wellenlängenmultiplex- oder WDM-Technik) oder einer ähnlichen Technik nicht interferierende Signale transportiert, wobei das erste oder das zweite Teil (24 oder 28) des Verbinders (16) dann ein optisches und/oder elektrisches Multiplex- oder Demultiplexmittel umfaßt.

## Revendications

1. Connecteur opto-électrique (16) comportant une pluralité de voies d'entrée et/ou de sortie optiques (23) connectées de façon à pouvoir fonctionner à des moyens transducteurs (36, 40) et une pluralité associée de voies d'entrée et/ou de sortie électriques (47) également connectées de façon à pouvoir fonctionner aux moyens transducteurs (36, 40), les moyens transducteurs pouvant être mis en fonctionnement pour convertir un signal optique sur une voie d'entrée optique (23) en un signal électrique sur une voie de sortie électrique (47) et/ou pouvant être mis en fonctionnement pour convertir un signal électrique sur une voie d'entrée électrique (47) en un signal optique sur une voie de sortie optique (23), caractérisé en ce que le connecteur opto-électrique (16) est connectable de façon à pouvoir être dégagé et comprend une première partie (24) agencée pour porter les voies d'entrée et/ou de sortie optiques (23) et une seconde partie (28) agencée pour la solidariser avec la première partie (24) et pour porter les voies d'entrée et/ou de sortie électriques (47).

2. Connecteur opto-électrique (16) selon la revendication 1, dans lequel la première partie (24) du connecteur (16) comprend une prise femelle et la seconde partie (2'8) comprend une prise mâle.

3. Connecteur opto-électrique (16) selon la revendication 1 ou 2, dans lequel les moyens transducteurs (36, 40) sont situés dans la seconde partie et chaque voie (23) dans la première partie (24) du connecteur (16) est entièrement optique.

4. Connecteur opto-électrique (16) selon l'une quelconque des revendications précédentes, dans lequel chaque voie d'entrée et de sortie (23) de la première partie (24) est couplée directement ou indirectement à un bus optique (20).

5. Connecteur opto-électrique (16) selon l'une quelconque des revendications précédentes, dans lequel chaque voie d'entrée et de sortie électrique (47) de la seconde partie (48) est connectée à un bus électrique.

6. Connecteur opto-électrique (16) selon l'une quelconque des revendications précédentes, dans lequel une ou plusieurs des voies (23, 47) à travers le connecteur (16) sont bidirectionnelles.

7. Connecteur opto-électrique (16) selon l'une quelconque des revendications précédentes, dans lequel les moyens transducteurs (36, 40) de chaque voie à travers le connecteur (16) comprennent un transducteur opto-électrique (36) et/ou un transducteur électro-optique (40).

8. Connecteur opto-électrique (16) selon l'une quelconque des revendications précédentes, dans lequel chaque voies (23, 47) comprend des moyens amplificateurs (42, 44).

9. Connecteur opto-électrique (16) selon la revendication 8, dans lequel chaque moyen amplificateur (42, 44) est agencé pour amplifier un signal électrique d'entrée ou de sortie.

10. Connecteur opto-électrique (16) selon la revendication 8 ou 9, dans lequel chaque moyen amplificateur (42, 44) est un amplificateur tampon bidirectionnel pour conditionner des signaux électriques d'entrée et de sortie.

11. Connecteur opto-électrique (16) selon l'une quelconque des revendications précédentes, dans lequel la première partie (24) du connecteur (16) est sous la forme d'un connecteur de fond de panier d'un appareil électronique monté sur panier dans lequel des voies de données et/ou de signaux sont portées par au moins un bus optique (18), chaque seconde partie (28) du connecteur (16) est portée par une carte de traitement de données, et sont disposées pour les enficher dans le connecteur de fond de panier, les première et seconde parties (24, 28) du connecteur étant solidarisées.

12. Connecteur opto-électrique (16) selon l'une quelconque des revendications précédentes, dans lequel au moins l'une des voies optiques (23) ou au moins l'une des voies électriques (47) achemine des signaux non parasites par utilisation d'un multiplexage par répartition en longueur d'onde (WDM) ou d'une technique similaire, la première ou seconde partie (24 ou 28) du connecteur (16) incluant alors des moyens de multiplexage ou de démultiplexage optiques et/ou électriques.
